Europäisches Patentamt

European Patent Office

Office européen des brevets

(19)

(11) **EP 0 654 887 B1**

(12) **FASCICULE DE BREVET EUROPEEN**

(45) Date de publication et mention
de la délivrance du brevet:
**04.02.2004 Bulletin 2004/06**

(51) Int Cl.[7]: **H02M 5/458**, H02M 3/158,
H02J 9/06

(21) Numéro de dépôt: **94410105.4**

(22) Date de dépôt: **18.11.1994**

(54) **Alimentation sans coupure à neutre traversant, comportant un hacheur-élévateur double**

Unterbrechungsfreie Stromversorgung mit gemeinsamem Nullleiter und Doppelaufwärtskonverter

Uninterruptible power supply with common neutral line comprising a double boost switching converter

(84) Etats contractants désignés:
**BE DE ES GB IT**

(30) Priorité: **24.11.1993 FR 9314145**

(43) Date de publication de la demande:
**24.05.1995 Bulletin 1995/21**

(73) Titulaire: **MGE-UPS SYSTEMS**
**38240 Meylan (FR)**

(72) Inventeurs:
• **Mabboux, Henri**
**F-38050 Grenoble Cédex 09 (FR)**

• **Parrot, Olivier**
**F-38050 Grenoble Cédex 09 (FR)**

(74) Mandataire: **Jouvray, Marie-Andrée et al**
**Schneider Electric SA,**
**Sce. Propriété Industrielle**
**38050 Grenoble Cédex 09 (FR)**

(56) Documents cités:
**GB-A- 2 111 326       US-A- 4 719 559**
**US-A- 4 823 247**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne une alimentation sans coupure à neutre traversant.

Dans la plupart des alimentations sans coupure à neutre commun entre l'entrée et la sortie, un premier étage redresseur fournit, à partir du réseau, une tension continue sur un bus continu, aux bornes de deux condensateurs connectés en série et dont le point milieu est connecté au neutre commun. La tension alternative de sortie de l'alimentation est obtenue entre le neutre commun et la sortie d'un convertisseur continu-alternatif en demi-pont connecté aux bornes du bus continu. Une batterie est connectée au bus continu par l'intermédiaire d'un convertisseur continu-continu.

Dans le document US-A-4.823.247, deux batteries sont connectées, respectivement, entre les sorties positive et négative de l'étage redresseur et le neutre commun.

Dans le document GB-A-2.111.326, l'étage redresseur est constitué par deux diodes formant un doubleur et le convertisseur continu-continu qui interface la batterie d'accumulateurs comporte un transformateur élévateur H.F. L'utilisation d'un redressement simple ne permet pas de garantir en sortie une tension alternative d'amplitude suffisante quelles que soient les tolérances du réseau d'entrée.

Le document US-A-5.126.585 décrit une alimentation sans coupure dans laquelle l'étage redresseur est constitué par un redresseur réversible et le convertisseur continu-continu qui interface la batterie d'accumulateurs par un hacheur-élévateur simple.

Il a également été proposé de connecter un hacheur-élévateur double entre un premier bus continu, connecté à la fois à la sortie d'un redresseur et à la sortie d'un convertisseur continu-continu, à transformateur H.F ayant un secondaire à point milieu et dont le primaire est connecté à la batterie, et un second bus continu connecté à l'entrée du convertisseur continu-alternatif. Le neutre commun est alors connecté au point milieu du transformateur et au point milieu de deux condensateurs connectés en série aussi bien en amont qu'en aval du hacheur-élévateur double. Dans cette alimentation, comme dans la précédente, un convertisseur continu-continu est dédié à la batterie d'accumulateurs.

L'invention a pour but une alimentation sans coupure à neutre commun entre l'entrée et la sortie, ou neutre traversant, qui soit peu coûteuse, minimise le nombre des composants de puissance et adaptée aux puissances moyennes.

Selon l'invention, ce but est atteint par une alimentation sans coupure selon la revendication 1.

L'utilisation d'un seul étage élévateur contrôlé et la régulation, par le circuit de contrôle de l'étage élévateur, du point milieu de sortie du hacheur-élévateur double, aussi bien lorsque l'alimentation fonctionne sur batterie que sur réseau, permettent de minimiser le coût de l'alimentation tout en fournissant les performances requises. Une telle alimentation est plus particulièrement adaptée aux puissances moyennes, de l'ordre de 5 à 30 KVA environ.

Selon un développement de l'invention les moyens de régulation de déséquilibre comportent des moyens de mesure des première et seconde tensions continues, des premiers moyens de détermination de différence pour déterminer la différence entre les valeurs absolues des première et seconde tensions continues, des premiers moyens de correction connectés aux premiers moyens de détermination de différence, un inverseur connecté aux premiers moyens de détermination de différence et comportant une sortie connectée à une entrée de seconds moyens de correction, des moyens de commutation ayant une première entrée connectée à une sortie des premiers moyens de correction, une seconde entrée connectée à une sortie des seconds moyens de correction, et une entrée de commande pour connecter la première entrée des moyens de commutation à une sortie des moyens de régulation de déséquilibre lorsque le dispositif d'alimentation fonctionne sur réseau et pour connecter la seconde entrée des moyens de commutation à ladite sortie lorsque le dispositif d'alimentation fonctionne sur batterie.

Les premiers et seconds moyens de correction comportent chacun un intégrateur et une entrée de remise à zéro, l'intégrateur des premiers moyens de correction étant maintenu à zéro lorsque l'alimentation fonctionne sur batterie et l'intégrateur des seconds moyens de correction étant maintenu à zéro lorsque l'alimentation fonctionne sur réseau.

Dans un mode de réalisation préférentiel le circuit de contrôle comporte des moyens de régulation de la tension entre les conducteurs positif et négatif, des premiers et seconds moyens de régulation de courant respectivement associés à chacun des circuits hacheurs, la sortie des moyens de régulation de déséquilibre étant connectée à une entrée de chacun des moyens de régulation de courant. La régulation du déséquilibre s'ajoute ainsi à la double régulation en tension et en courant.

Selon un autre développement de l'invention les premiers et seconds moyens de régulation de courant comportent chacun des moyens de forçage pour forcer une valeur représentative d'un courant de référence à une valeur prédéterminée, et des moyens de contrôle desdits moyens de forçage comportant des moyens de comparaison des première et seconde tensions continues à des seuils prédéterminés respectifs.

De préférence, lorsque le dispositif est alimenté par la batterie, les moyens de contrôle fournissent un signal de commande des moyens de forçage des circuits hacheurs positif et négatif si les première et seconde tensions continues sont simultanément inférieures à leurs seuils respectifs, un signal de commande des moyens de forçage du circuit hacheur positif si la seconde tension continue est inférieure au seuil associé tandis que la première tension continue est supérieure au seuil associé, et un signal de commande des moyens de forçage du circuit hacheur négatif si première tension continue est inférieure au seuil associé tandis que la seconde tension continue est supérieure au seuil associé.

D'autres avantages et caractéristiques ressortiront plus clairement de l'exposé qui va suivre de modes de réalisation particuliers de l' invention, donnés à titre d'exemples non limitatifs et représentés aux dessins annexés sur lesquels :

La figure 1 illustre, sous forme schématique, une alimentation sans coupure dans laquelle l'invention est mise en oeuvre.

La figure 2 représente une variante de réalisation du redresseur lorsque l'alimentation est connectée à un réseau triphasé.

La figure 3 représente, sous forme de schéma-blocs, un mode de réalisation particulier du circuit de contrôle du hacheur-élévateur double de la figure 1.

La figure 4 représente un mode de réalisation particulier du circuit de régulation de déséquilibre du circuit de contrôle selon la figure 3.

La figure 5 représente un mode de réalisation particulier d'un circuit de contrôle de la fonction appel de charge du circuit de contrôle selon la figure 3.

La figure 6 représente un mode de réalisation particulier du circuit de correction du circuit de régulation de tension du circuit de contrôle selon la figure 3.

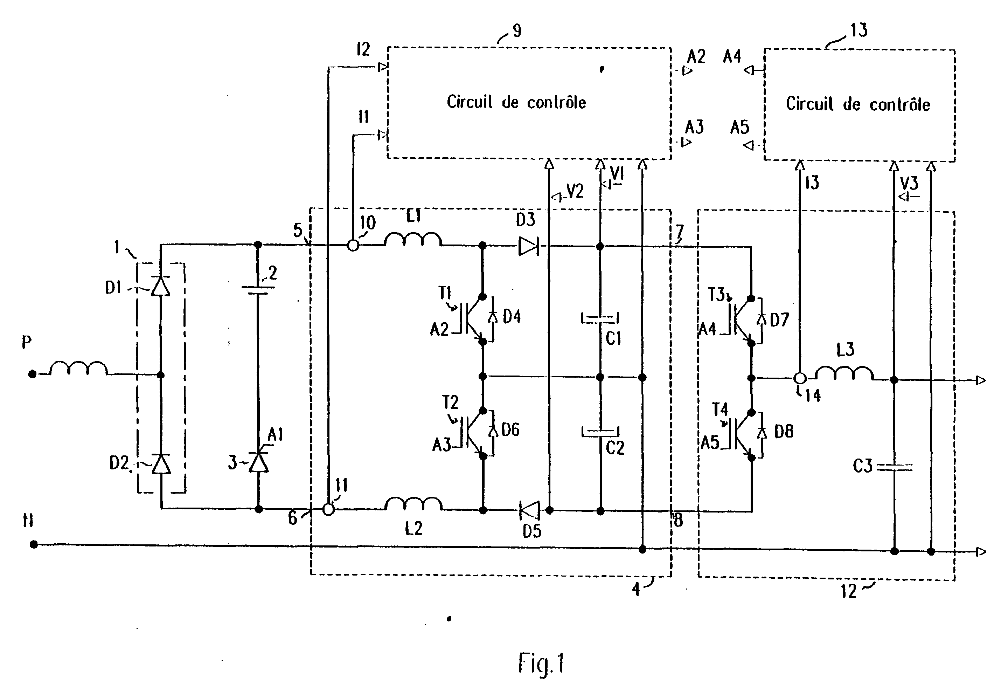

L'alimentation sans coupure de la figure 1 est connectée à un réseau alternatif monophasé, comportant un conducteur de phase P et un conducteur de neutre N. Le conducteur de neutre N, dit neutre commun ou neutre traversant, est connecté directement à une sortie de l'alimentation.

Le conducteur de phase P est connecté à l'entrée d'un redresseur 1. Sur la figure 1, le redresseur est constitué par deux diodes D1 et D2 connectées en série entre les sorties positive et négative du redresseur. Le conducteur de phase est connecté, à travers une inductance, au point commun des diodes D1 et D2. Le redresseur 1 constitue ainsi un double redresseur monoalternance.

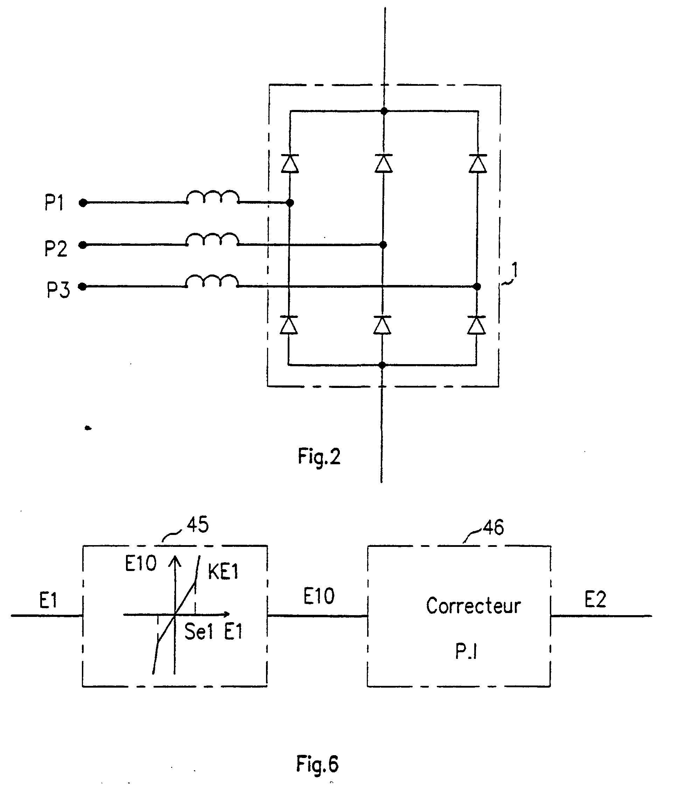

La figure 2 représente une variante de réalisation du redresseur 1, adaptée au cas où le réseau est un réseau triphasé. Dans ce cas, chacun des conducteurs de phase P1, P2, P3, du réseau est connecté à une branche du redresseur, constituée de la même manière que dans le cas d'un réseau monophasé, les trois branches du redresseur étant connectées en parallèle.

Pour permettre la maîtrise de la tension de sortie du redresseur, notamment à la mise sous tension ou lorsque le réseau est hors tolérance, il est possible de remplacer les diodes par des thyristors.

Une batterie 2 est connectée aux bornes de sortie du redresseur par l'intermédiaire d'un interrupteur statique 3, constitué sur la figure par un thyristor. Le thyristor reçoit sur une entrée de commande un signal de commande A1. Le signal A1 est fourni par un circuit de détection de l'état du réseau, non représenté. Lorsque la tension du réseau est à l'intérieur de tolérances prédéterminées acceptables, le signal A1 commande l'ouverture de l'interrupteur statique 3, c'est-à-dire le blocage du thyristor. Par contre, dès que la tension du réseau sort de ces tolérances, le signal A1 commande la fermeture de l'interrupteur statique, de manière à connecter la batterie 2 en parallèle sur la sortie du redresseur 1, l'alimentation sans coupure fonctionnant alors sur batterie.

L'alimentation sans coupure comporte un hacheur-élévateur double 4 comportant deux entrées 5 et 6, respectivement connectées aux sorties positive et négative du redresseur 1. Le hacheur-élévateur double 4 comporte un hacheur-élévateur positif, connecté à l'entrée 5, et un hacheur-élévateur négatif connecté à l'entrée 6.

Le hacheur-élévateur positif comporte une inductance L1 connectée en série avec une diode D3 entre l'entrée 5 et une sortie positive 7. Un interrupteur statique T1, constitué sur la figure par un transistor de type IGBT, est connecté en aval de l'inductance L1, entre le point commun à L1 et D3 et une sortie intermédiaire directement connectée au conducteur de neutre N. Une diode D4 est connectée en parallèle et en inverse sur le transistor T1. De manière analogue, le hacheur-élévateur négatif comporte une inductance L2 connectée en série avec une diode D5 entre l'entrée 6 et une sortie négative 8. Un interrupteur statique T2, par exemple constitué par un transistor de type IGBT, est connecté en aval de l'inductance L2, entre la sortie intermédiaire et le point commun à L2 et D5. Une diode D6 est connectée en parallèle et en inverse sur le transistor T2.

Deux condensateurs C1 et C2 sont connectés en série entre les sorties 7 et 8, leur point milieu étant connecté à la sortie intermédiaire. Un circuit de contrôle 9 fournit des signaux de commande, A2 et A3, respectivement à des entrées de commande des interrupteurs statiques T1 et T2. Des capteurs de courant 10 et 11 mesurent les courants I1 et I2 circulant respectivement dans les inductances L1 et L2 d'entrée des hacheurs positif et négatif et fournissent les valeurs mesurées au circuit de contrôle. Le circuit de contrôle comporte également des entrées reliées respectivement au conducteur positif connecté à la sortie 7, au conducteur négatif connecté à la sortie 8 et au conducteur de neutre N, pour recevoir des signaux représentatifs respectivement des tensions V1 et V2 des conducteurs positif et négatif par rapport au neutre.

Les sorties 7 et 8 du hacheur-élévateur double 4 sont connectées aux entrées d'un convertisseur continu-alternatif 12. Dans le mode de réalisation représenté sur la figure 1, le convertisseur 12 comporte un montage en demi-pont comportant, de manière connue, deux interrupteurs statiques T3 et T4, de type IGBT, en série entre les sorties 7 et 8. Des diodes D7 et D8 sont respectivement montées en parallèle et en inverse sur T3 et T4. Le point commun aux interrupteurs statiques T3 et T4 est connecté, par une inductance L3, à une sortie de l'alimentation sans coupure dont la seconde sortie est constituée par le neutre N. Un condensateur C3 est classiquement connecté entre les sorties du convertisseur 12. Un circuit de contrôle 13 fournit des signaux de commande, A4 et A5, respectivement à des entrées de commande des interrupteurs statiques T3 et T4. Le circuit de contrôle comporte des entrées reliées aux bornes de C3 pour recevoir des signaux représentatifs de la tension V3 de sortie de l'alimentation. Un capteur de courant 14 fournit au circuit de contrôle 13 des signaux représentatifs du courant I3 circulant dans l'inductance L3. Le fonctionnement du circuit de contrôle 13 est classique et ne sera pas décrit plus en détail.

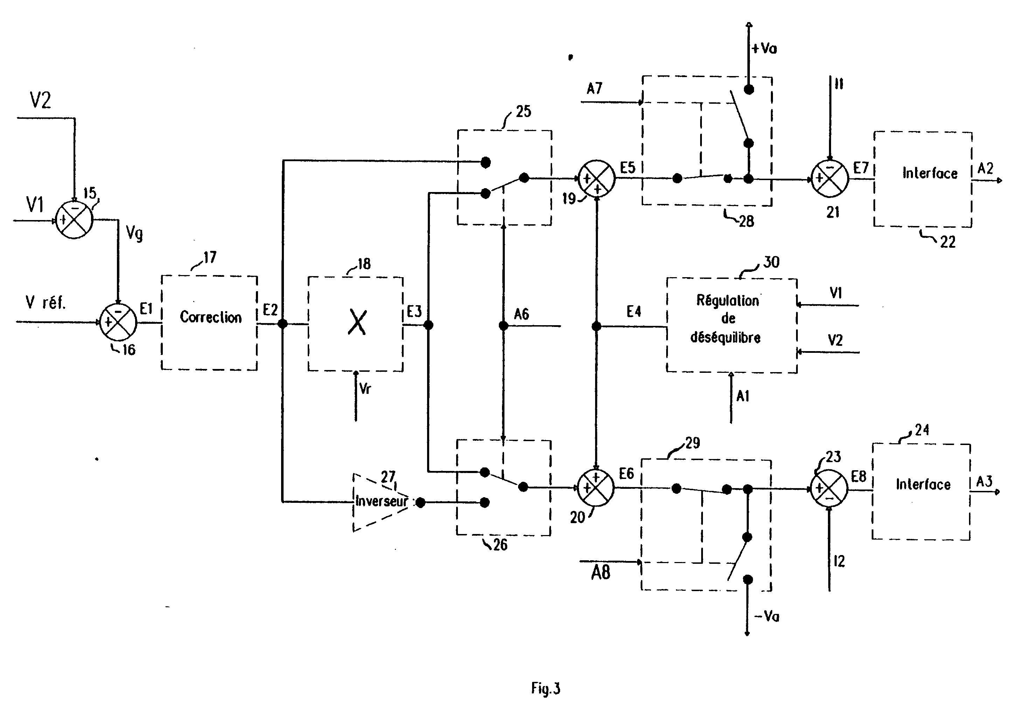

La figure 3 illustre plus en détail le circuit 9 de contrôle du hacheur-élévateur double.

Le circuit de contrôle 9 effectue une régulation de la tension globale de sortie du hacheur double. De plus il comporte une régulation du déséquilibre entre les tensions V1 et V2, combinée à une régulation du courant dans le hacheur-élévateur positif et du courant dans le hacheur-élévateur négatif.

Une première boucle de régulation, régulation de la tension globale de sortie du hacheur-élévateur double, comporte des entrées recevant les tensions positive V1 et négative V2 et un circuit 15 effectuant le calcul de la tension globale, Vg = V1 - V2, entre les sorties 7 et 8. Une tension continue Vref de référence est, suivant le mode de réalisation représenté, appliquée sur une autre entrée de la boucle de régulation, un circuit 16 effectuant la différence entre la tension Vref de référence et la tension globale Vg pour fournir un premier signal d'erreur E1 représentatif de l'erreur de tension globale. Le signal E1 est appliqué à l'entrée d'un circuit de correction 17 qui sera décrit plus en détail au regard de la figure 6 et qui fournit un second signal d'erreur E2.

Lorsque le réseau est un réseau monophasé, la boucle de régulation en tension est de préférence complétée de manière à permettre un prélèvement sinusoïdal de courant sur le réseau. Pour cela, le mode de réalisation préférentiel représenté à la figure 3 comporte un circuit multiplicateur 18 recevant sur une entrée le signal E2 et sur une autre entrée un signal alternatif Vr représentatif de la tension du réseau. Le circuit 18 fournit un troisième signal d'erreur, sinusoïdal, E3.

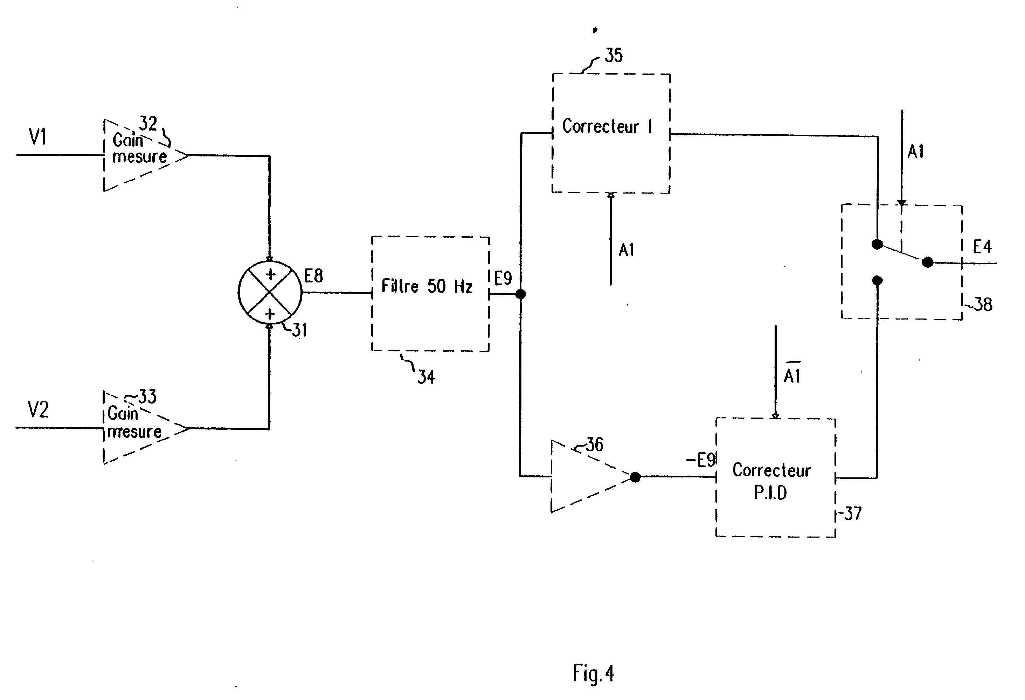

Sur la figure 3, le signal E3 est ajouté à un quatrième signal d'erreur E4 dans des circuits 19 et 20. Le signal d'erreur E4 est fourni par un circuit de régulation de déséquilibre 30 qui sera décrit plus en détail au regard de la figure 4. Les circuits 19 et 20 fournissent respectivement des cinquième et sixième signaux d'erreur E5 et E6.

Le signal d'erreur E5 est utilisé comme signal de référence par la boucle de régulation en courant du hacheur-élévateur positif. Un circuit 21 fait la différence entre le signal d'erreur E5 et un signal représentatif du courant I1 dans le hacheur-élévateur positif et fournit un septième signal d'erreur E7. Le signal E7 est appliqué à l'entrée d'un circuit de régulation et de commande, ou circuit d'interface 22, qui fournit le signal A2 de commande de l'interrupteur statique T1 du hacheur-élévateur positif. De manière analogue, le signal d'erreur E6 est utilisé comme signal de référence par la boucle de régulation en courant du hacheur-élévateur négatif. Un circuit 23 fait la différence entre le signal d'erreur E6 et un signal représentatif du courant I2 dans le hacheur-élévateur négatif et fournit un huitième signal d'erreur E8. Le signal d'erreur sur le courant du hacheur négatif E8 est appliqué à l'entrée d'un circuit de régulation et de commande, ou circuit d'interface 24, qui fournit le signal A3 de commande de l'interrupteur statique T2 du hacheur-élévateur négatif.

Lorsque le réseau est un réseau triphasé et lorsque l'alimentation fonctionne sur batterie, la boucle de régulation en tension ne comporte pas le circuit multiplicateur 18. Dans le mode de réalisation préférentiel illustré à la figure 3, qui est adapté aussi bien à un réseau monophasé avec prélèvement sinusoïdal de courant qu'à un réseau triphasé et à un fonctionnement sur batterie avec prélèvement continu de courant, un aiguillage est prévu. L'aiguillage comporte un commutateur 25 connectant la sortie du circuit multiplicateur 18 à l'entrée du circuit 19 lorsque le réseau est monophasé. Par contre, lorsque l'alimentation est alimentée par la batterie ou lorsque le réseau est triphasé, un signal A6 commande le commutateur de manière à connecter l'entrée du circuit 19 directement à la sortie du circuit de correction 17. De manière analogue, un commutateur 26 contrôlé par le même signal A6, connecte l'entrée du circuit 20 à la sortie du circuit multiplicateur 18 lorsque le réseau est monophasé et à la sortie d'un inverseur 27 connecté à la sortie du circuit de correction 17 lorsque le réseau est triphasé ou que l'alimentation fonctionne sur batterie.

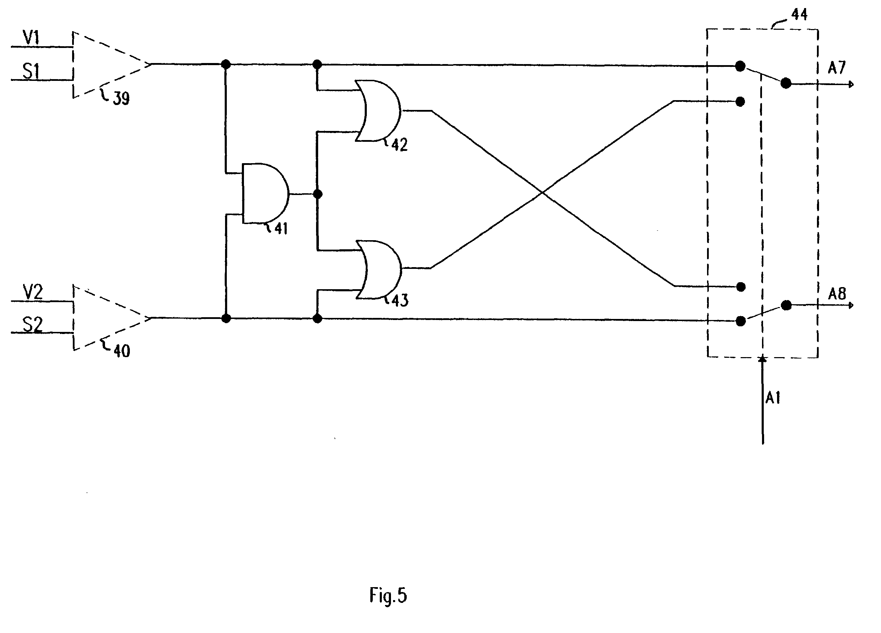

L'alimentation de la figure 3 comporte, de plus, des moyens de réaliser une fonction appel de charge destinés à améliorer le régime dynamique de la régulation de tension en cas d'impact de charge. Ces moyens comportent un commutateur de forçage dans chaque circuit de régulation de courant. Un commutateur 28 permet, sous le contrôle d'un signal de commande A7, d'utiliser comme signal de référence de la boucle de régulation de courant du hacheur-élévateur positif le signal d'erreur E5 dans le cas général et une tension continue positive, prédéterminée, élevée, +Va, en cas d'impact de charge. De manière analogue, un commutateur 29 permet, sous le contrôle d'un signal de commande A8, d'utiliser comme signal de référence de la boucle de régulation du hacheur-élévateur négatif le signal d'erreur E6 dans le cas général et une tension continue négative, prédéterminée, élevée, -Va, en cas d'impact de charge. Les tensions +Va et -Va peuvent, par exemple, être de l'ordre de +15V et -15V. Il est ainsi possible , en cas d'impact de charge, d'augmenter rapidement l'énergie disponible à la sortie de l'alimentation. Le circuit de contrôle de la fonction appel de charge, fournissant les signaux A7 et A8, sera décrit ultérieurement au regard de la figure 5.

Le circuit de régulation de déséquilibre 30 représenté à la figure 4 fournit le quatrième signal d'erreur E4 destiné à corriger un déséquilibre entre les tensions V1 et V2.

Sur réseau le hacheur-élévateur double comporte trois entrées 5 , 6 et N, et trois sorties 7, 8 et N, tandis que sur batterie il comporte toujours les trois sorties mais deux entrées, 5 et 6, seulement. S'il est possible d'envisager une régulation séparée de V1 et V2 lorsque l'alimentation est sur réseau, la dépendance des hacheurs positif et négatif sur batterie impose la régulation du point milieu N. La solution retenue, à savoir la régulation de la tension globale Vg liée à une régulation du déséquilibre est applicable aussi bien sur réseau que sur batterie.

Dans le mode de réalisation particulier du circuit de régulation de déséquilibre représenté à la figure 4, un circuit 31 fait la somme des tensions V1 et V2 qui lui sont appliquées, éventuellement par l'intermédiaire d'amplificateurs de mesure 32 et 33, ayant un gain de mesure Gm prédéterminé. La tension V1 étant positive et la tension V2 négative, cela revient à faire la différence entre les valeurs absolues des tensions V1 et V2. Le circuit 31 fournit ainsi un huitième signal d'erreur E8, qui est appliqué à l' entrée d'un filtre 34 destiné à filtrer la fréquence du réseau, 50 Hz sur la figure. Le signal de sortie du filtre est un neuvième signal d'erreur E9.

Cette partie de circuit de régulation du déséquilibre est identique, que l'alimentation fonctionne sur réseau ou sur batterie. Par contre, il est indispensable de définir deux voies de correction différentes pour la suite de la régulation. En effet, les fonctions de transfert du hacheur-élévateur double sont différentes selon que l'alimentation fonctionne sur réseau ou sur batterie.

En effet, sur réseau chaque hacheur fonctionne à partir des sources de tension référencées au neutre et générées par le redressement simple monophasé ou triphasé. Chaque hacheur est indépendant. Il n'y a pas de transfert d'énergie entre les deux hacheurs. Par contre, en fonctionnement sur batterie, nous voyons sur la fig. 1 que le convertisseur peut transférer l'énergie de la batterie, soit totalement sur C1 si T2 est toujours conducteur, soit totalement sur C2 si T1 est toujours conducteur, soit de façon répartie entre C1 et C2 suivant le temps de conduction des interrupteurs T1 et T2.

Le signal E9 est appliqué à l'entrée d'un premier correcteur 35 et, par l'intermédiaire d'un inverseur 36, à l'entrée d'un second correcteur 37. Un commutateur 38, contrôlé par le signal de commande A1, connecte la sortie du circuit 38, qui fournit le quatrième signal d'erreur E4, à la sortie du premier correcteur 35 lorsque l'alimentation fonctionne sur réseau et à la sortie du second correcteur 37 lorsque l'alimentation fonctionne sur batterie.

Dans le mode de réalisation préférentiel de la figure 4, le premier correcteur 35 est du type intégral, tandis que le second correcteur 37 est du type proportionnel - intégral - dérivé (P.I.D.) pour assurer la stabilité du système.

Pour réduire les perturbations lors du passage d'une voie de correction à l'autre, les fonctions intégrales des correcteurs 35 et 37 peuvent être mises à zéro lorsque la voie correspondante n'est pas utilisée. Dans le mode de réalisation représenté, chaque correcteur 35 et 37 comporte une entrée de remise à zéro de l'intégrateur qu'il comporte. L'entrée de remise à zéro du correcteur 35 reçoit le signal de commande A1, de manière à être maintenu à zéro lorsque l' alimentation est sur batterie, tandis que l' entrée de remise à zéro du correcteur 37 reçoit un signal $\overline{A1}$ complémentaire de A1 de manière à être maintenu à zéro lorsque l'alimentation est sur réseau.

Un mode particulier de réalisation du circuit de contrôle de la fonction appel de charge est illustré à la figure 5. Lorsque l'alimentation fonctionne sur réseau (cas représenté sur la figure), le circuit contrôle séparément les tensions V1 et V2 et agit indépendamment sur les boucles de régulation en courant des hacheurs positif et négatif. Ainsi, la tension V1 est comparée à un seuil prédéterminé S1 par un comparateur 39 qui fournit le signal A7 de commande du commutateur 28 (figure 3). Lorsque la tension V1 est inférieure au seuil S1, le signal A7 provoque le forçage du hacheur-élévateur positif, en utilisant comme signal de référence de sa boucle de régulation en courant la tension +Va. De même, la tension V2 est comparée à un seuil prédéterminé S2 par un comparateur 40 qui fournit le signal A8 de commande du commutateur 29. Lorsque la tension V2 est, en valeur absolue, inférieure au seuil S2, le signal A8 provoque le forçage du hacheur-élévateur négatif, en utilisant la tension -Va comme signal de référence de sa boucle de régulation en courant. Les comparateurs 39 et 40 sont, de préférence, des comparateurs à hystérésis et, à titre d'exemple, les seuils S1 et S2 peuvent être inférieurs d'environ 5 % à la tension nominale du réseau.

Lorsque l'alimentation fonctionne sur batterie, il n'est pas possible de commander indépendamment les hacheurs-élévateurs positif et négatif. Le circuit de contrôle de la fonction appel de charge agit alors simultanément sur les hacheurs-élévateurs positif et négatif, cas n° 1, lorsque V1 est inférieure à S1 et que, simultanément, V2 est, en valeur absolue, inférieure à S2, pour forcer les signaux de référence de leurs boucles de régulation de courant respectivement à +Va et -Va. Si V1 est inférieure à S1 tandis que V2 est correcte, cas n° 2, alors le circuit de contrôle agit uniquement sur le hacheur-élévateur négatif. Si V2 est, en valeur absolue, inférieure à S2 tandis que V1 est correcte, cas n° 3, alors le circuit de contrôle agit uniquement sur le hacheur-élévateur positif. Le circuit de la figure 5 représente un mode de réalisation particulier permettant de remplir cette fonction. Un circuit logique "ET" 41 est connecté aux sorties des comparateurs 39 et 40 de manière à fournir un signal logique 1 lorsque les deux tensions V1 et V2 sont inférieures à leurs seuils respectifs, c' est-à-dire dans le cas n° 1 précité. Un circuit logique "OU" 42 est connecté à la sortie du comparateur 39 et à la sortie du circuit "ET" 41, de manière à fournir un signal logique 1 dans les cas n° 1 et 2. Un circuit logique "OU" 43 est connecté à la sortie du comparateur 40 et à la sortie du circuit "ET" 41, de manière à fournir un signal logique 1 dans les cas n° 1 et 3. Un commutateur 44, commandé par le signal de commande A1, connecte une première sortie du circuit de contrôle de la fonction appel de charge, fournissant le signal A7, à la sortie du comparateur 39 lorsque l'alimentation fonctionne sur réseau et à la sortie du circuit logique "OU" 43 lorsque l'alimentation fonctionne sur batterie. Ainsi le forçage du hacheur-élévateur positif est réalisé lorsque V1 est inférieure à S1 sur réseau et dans les cas n° 1 et 3 sur batterie, c'est-à-dire lorsque V1 et V2 sont simultanément inférieures à leurs seuils respectifs ou lorsque seule V2 est inférieure au seuil S2 correspondant. Le commutateur 44 connecte également une seconde sortie, fournissant le signal A8, à la sortie du comparateur 40 en fonctionnement sur réseau et à la sortie du circuit logique "OU" 42 en fonctionnement sur batterie. Ainsi le forçage du hacheur-élévateur négatif est réalisé lorsque V2 est inférieure à S2 sur réseau et dans les cas n° 1 et 2 sur batterie.

La figure 6 représente un mode de réalisation particulier du circuit de correction 17 de la boucle de régulation en tension. Le circuit 17 comporte un circuit 45 de correction rapide recevant en entrée le premier signal d'erreur E1 et fournissant un dixième signal d'erreur E10. Le signal E10 est appliqué à l'entrée d'un correcteur 46, qui est, par exemple, un correcteur de type proportionnel intégral et qui fournit le second signal d'erreur E2. Tant que l'erreur E1 est faible, le signal E10 est égal à E1. Par contre, si E1 dépasse, en valeur absolue, un seuil prédéterminé Se1, le signal d'erreur E10 est donné par :

$$E10 = KE1$$

où K est un coefficient supérieur à 1. Ainsi l'erreur est amplifiée et la correction plus rapide, notamment dans le cas où il y a des impacts de charge. A titre d'exemple le seuil Se1 peut être de l'ordre de 5 % de la tension globale Vg et K de l'ordre de 10.

**Revendications**

1. Alimentation sans coupure comportant desmoyens de redressement (1) connectés à un réseau de tension alternative et comportant des sorties positive et négative, une batterie (2) connectée aux sorties des moyens de redressement (1), un hacheur-élévateur double (4) comportant un circuit hacheur positif (L1, T1, D3, D4), ayant une entrée (5) connectée à la sortie positive des moyens de redressement, un circuit hacheur négatif (L2, T2, D5, D6), ayant une entrée (6) connectée à la sortie négative des moyens de redressement, et un circuit de contrôle (9) connecté au hacheur-élévateur double (4) pour que le circuit hacheur positif fournisse une première tension continue (V1) entre une sortie intermédiaire et un conducteur positif et que le circuit hacheur négatif fournisse une seconde tension continue (V2) entre ladite sortie intermédiaire et un conducteur négatif , des moyens (12) de conversion continu-alternatif étant connectés entre les conducteurs négatif et positif, le réseau comportant un conducteur de neutre (N) connecté directement à ladite sortie intermédiaire et à une sortie des moyens de conversion continu-alternatif, alimentation **caractérisée en ce qu'**aucune borne de la batterie (2) n'est connectée directement au conducteur de neutre (N) et **en ce que** le circuit de contrôle (9) comporte des moyens (30) de régulation d'un déséquilibre entre les valeurs absolues desdites première et seconde tensions continues (V1, V2).

2. Alimentation selon la revendication 1, **caractérisée en ce que** les moyens (30) de régulation de déséquilibre comportent des moyens de mesure des première et seconde tensions continues (V1, V2), des premiers moyens (31) de détermination de différence pour déterminer la différence (E8) entre les valeurs absolues des première ei seconde tensions continues, des premiers moyens de correction (35) connectés aux premiers moyens de détermination de différence, un inverseur (36) connecté aux premiers moyens de détermination de différence et comportant une sortie (-E9) connectée à une entrée de seconds moyens de correction (37), des moyens de commutation (38) ayant une première entrée connectée à une sortie des premiers moyens de correction (35), une seconde entrée connectée à une sortie des seconds moyens de correction (37), et une entrée de commande (A1) pour connecter la première entrée des moyens de commutation à une sortie (E4) des moyens (30) de régulation de déséquilibre lorsque le dispositif d' alimentation fonctionne sur réseau et pour connecter la seconde entrée des moyens de commutation à ladite sortie (E4) lorsque le dispositif d'alimentation fonctionne sur batterie.

**3.** Alimentation selon la revendication 2, **caractérisée en ce que** les premiers et seconds moyens de correction (35, 37) comportent chacun un intégrateur et une entrée de remise à zéro, l'intégrateur des premiers moyens de correction (35) étant maintenu à zéro lorsque l'alimentation fonctionne sur batterie et l'intégrateur des seconds moyens de correction étant maintenu à zéro lorsque l'alimentation fonctionne sur réseau.

**4.** Alimentation selon l'une quelconque des revendications 1 à 3, **caractérisée en ce que** le circuit de contrôle (9) comporte des moyens (15, 16, 17, 18, 25, 26) de régulation de la tension (Vg) entre les conducteurs positif et négatif, des premiers (E5, E7, 22) et seconds (E6, E8, 24) moyens de régulation de courant respectivement associés à chacun des circuits hacheurs, la sortie (E4) des moyens (30) de régulation de déséquilibre étant connectée à une entrée de chacun des moyens de régulation de courant.

**5.** Alimentation selon la revendication 4, **caractérisée en ce que** les premiers et seconds moyens de régulation de courant comportent chacun des moyens (28, 29, A7, A8) de forçage pour forcer une valeur représentative d'un courant de référence à une valeur prédéterminée (+Va, - Va) et des moyens (39 à 44) de contrôle desdits moyens de forçage comportant des moyens (39, 40) de comparaison des première et seconde tensions continues (V1, V2) à des seuils prédéterminés respectifs (S1, S2).

**6.** Alimentation selon la revendication 5, **caractérisée en ce que**, lorsque le dispositif est alimenté par la batterie, les moyens de contrôle fournissent un signal (A7, A8) de commande des moyens de forçage des circuits hacheurs positif et négatif si les première et seconde tensions continues (V1, V2) sont simultanément inférieures à leurs seuils respectifs (S1, S2), un signal (A7) de commande des moyens de forçage du circuit hacheur positif si la seconde tension continue (V2) est inférieure au seuil associé (S2) tandis que la première tension continue (V1) est supérieure au seuil associé (S1), et un signal A8 de commande des moyens de forçage du circuit hacheur négatif si la première tension continue (V1) est inférieure au seuil associé (S1) tandis que la seconde tension continue (V2) est supérieure au seuil associé (S2).

**7.** Alimentation selon l'une quelconque des revendications 4 à 6, **caractérisée en ce que** les moyens de régulation de tension comportent des moyens (V1, V2, 15) de mesure de la tension (Vg) entre les conducteurs positif et négatif, des seconds moyens (16) de détermination de différence, pour déterminer la différence entre une tension continue globale de référence (V ref) et la tension (Vg) entre les conducteurs positif et négatif et fournir un premier signal d'erreur (E1), et des troisièmes moyens de correction (17, 18) comportant des moyens de correction rapide (45) connectés à la sortie des seconds moyens de détermination de différence (16) et fournissant un second signal d'erreur (E10) identique au premier signal d'erreur (E1) lorsque le premier signal d'erreur (E1) est inférieur à un seuil d'erreur prédéterminée (Sel) et égal au produit du premier signal d'erreur (E1) par un coefficient prédéterminé (K), supérieur à 1, lorsque le premier signal d'erreur est supérieur audit seuil d'erreur, un circuit correcteur (46) étant connecté à la sortie des moyens de correction rapide (45).

**8.** Alimentation selon la revendication 7, **caractérisée en ce que** les troisièmes moyens de correction (17, 18) comportent des moyens (18) de prélèvement sinusoïdal de courant, connectés à la sortie du circuit correcteur (46), et des moyens de commutation (25, 26) pour connecter des première et seconde sorties des moyens de régulation de tension à une sortie (E3) des moyens de prélèvement sinusoïdal de courant lorsque l'alimentation fonctionne sur réseau et que le réseau est un réseau monophasé, et pour connecter ladite première sortie des moyens de régulation de tension à la sortie du circuit correcteur (46) et ladite seconde sortie des moyens de régulation de tension à la sortie du circuit correcteur (46) par l'intermédiaire d'un inverseur (27) lorsque l'alimentation fonctionne sur batterie ou que le réseau est triphasé.

**Patentansprüche**

**1.** Unterbrechungsfreie Stromversorgung mit an ein Wechselspannungsnetz angeschlossenen sowie einen positiven und einen negativen Ausgang umfassenden Gleichrichtmitteln (1), einer an die Ausgänge der Gleichrichtmittel (1) angeschlossenen Batterie (2), einem doppeltem Zerhackerverstärker (4), der eine positive Zerhackerschaltung (L1, T1, D3, D4) mit einem an den positiven Ausgang der Gleichrichtmittel (1) angeschlossenen Eingang (5) sowie eine negative Zerhackerschaltung (L2, T2, D5, D6) mit einem an den negativen Ausgang der Gleichrichtmittel (1) angeschlossenen Eingang (6) umfaßt, sowie einer an den doppelten Zerhackerverstärker (4) angeschlossenen Steuerschaltung (9), die dazu dient, daß die positive Zerhackerschaltung zwischen einem Zwischenausgang und einem positiven Leiter eine erste Gleichspannung (V1) und die negative Zerhackerschaltung zwischen dem genannten Zwischenausgang und einem negativen Leiter eine zweite Gleichspannung (V2) liefert, wobei zwischen dem negativen und dem positiven Leiter Gleichspannungs-Wechselspannungs-Umrichtmittel (12) angeschlossen sind und das Netz einen direkt an den genannten Zwischenausgang sowie an einen Ausgang der Gleichspannungs-Wechselspannungs-Umrichtmittel (12) angeschlossenen Neutralleiter (N) umfaßt, welche Stromversorgung **dadurch gekennzeichnet ist, daß** keine Klemme der Batterie (2) direkt mit dem Neutralleiter (N) verbunden ist und daß die Steuerschaltung (9) Mittel (30) zur Ausregelung einer Abweichung zwischen den Absolutwerten der genannten ersten und zweiten Spannung (V1, V2) umfaßt.

2. Stromversorgung nach Anspruch 1, **dadurch gekennzeichnet, daß** die Abweichungsregelmittel (30) Meßmittel zur Messung der ersten und der zweiten Gleichspannung (V1, V2), erste Differenzbestimmungsmittel (31) zur Bestimmung der Differenz (E8) zwischen den Absolutwerten der ersten und der zweiten Gleichspannung, an die ersten Differenzbestimmungsmittel angeschlossene erste Korrekturmittel (35), ein an die ersten Differenzbestimmungsmittel angeschlossenes Invertierglied (36) mit einem, an einen Eingang von zweiten Korrekturmitteln (37) angeschlossenen Ausgang (-E9), Umschaltmittel (38) mit einem an den Ausgang der ersten Korrekturmittel (35) angeschlossenen ersten Eingang, einem an den Ausgang der zweiten Korrekturmittel (37) angeschlossenen zweiten Eingang, sowie einem Steuereingang (A1) zur Verbindung des ersten Eingangs der Umschaltmittel mit einem Ausgang (E4) der Abweichungsregelmittel (30), wenn die Stromversorgungsanlage im Netzbetrieb arbeitet, bzw. zur Verbindung des zweiten Eingangs der Umschaltmittel mit dem genannten Ausgang (E4), wenn die Stromversorgungsanlage im Batteriebetrieb arbeitet.

3. Stromversorgung nach Anspruch 2, **dadurch gekennzeichnet, daß** die ersten und die zweiten Korrekturmittel (35, 37) jeweils einen Integrierer und einen Rückstelleingang umfassen, wobei der Integrierer der ersten Korrekturmittel (35) auf null gehalten wird, solange die Stromversorgung im Batteriebetrieb arbeitet, und der Integrierer der zweiten Korrekturmittel auf null gehalten wird, solange die Stromversorgung im Netzbetrieb arbeitet.

4. Stromversorgung nach irgendeinem der Ansprüche 1 bis 3, **dadurch gekennzeichnet, daß** die Steuerschaltung (9) Spannungsregelmittel (15, 16, 17, 18, 25, 26) zur Regelung der Spannung (Vg) zwischen dem positiven und dem negativen Leiter sowie jeder der Zerhackerschaltungen zugeordnete erste (E5, E7, 22) bzw. zweite (E6, E8, 24) Stromregelmittel umfaßt, wobei der Ausgang (F4) der Abweichungsregelmittel (30) an einen Eingang jedes der Stromregelmittel angeschlossen ist.

5. Stromversorgung nach irgendeinem der Ansprüche 1 bis 3, **dadurch gekennzeichnet, daß** die ersten und die zweiten Stromregelmittel jeweils Zwangssetzmittel (28, 29, A7, A8) zum zwangsweisen Setzen einer, einen Referenzstrom abbildenden Größe auf einen festgelegten Wert (+Va, -Va) sowie Steuermittel (39 bis 44) zur Ansteuerung der genannten Zwangssetzmittel umfassen, die Vergleichsmittel (39, 40) zum Vergleich der ersten und der zweiten Gleichspannung (V1, V2) mit jeweils festgelegten Schwellwerten (S1, S2) umfassen.

6. Stromversorgung nach Anspruch 5, **dadurch gekennzeichnet, daß** die Steuermittel bei Batteriebetrieb der Anlage ein Steuersignal (A7, A8) zur Ansteuerung der Zwangssetzmittel der positiven und der negativen Zerhackerschaltung ausgeben, wenn die erste und die zweite Gleichspannung (V1, V2) gleichzeitig unter ihrem jeweiligen Schwellwert (S1, S2) liegen, ein Steuersignal (A7) zur Ansteuerung der Zwangssetzmittel der positiven Zerhackerschaltung ausgeben, wenn die zweite Gleichspannung (V2) unter dem zugeordneten Schwellwert (S2) und die erste Gleichspannung (V1) über dem zugeordneten Schwellwert (S1) liegen, und ein Steuersignal A8 zur Ansteuerung der Zwangssetzmittel der negativen Zerhackerschaltung ausgeben, wenn die erste Gleichspannung (V1) unter dem zugeordneten Schwellwert (S1) und die zweite Gleichspannung (V2) über dem zugeordneten Schwellwert (S2) liegen.

7. Stromversorgung nach irgendeinem der Ansprüche 4 bis 6, **dadurch gekennzeichnet, daß** die Spannungsregelmittel Meßmittel (V1, V2, 15) zur Messung der Spannung (Vg) zwischen dem positiven und dem negativen Leiter, zweite Differenzbestimmungsmittel (16) zur Bestimmung der Differenz zwischen einer Referenz-Gesamtgleichspannung (Vref) und der Spannung (Vg) zwischen dem positiven und dem negativen Leiter sowie zur Ausgabe eines ersten Fehlersignals (E1), sowie dritte Korrekturmittel (17, 18) mit Schnellkorrekturmitteln (45) umfaßt, die an den Ausgang der zweiten Differenzbestimmungsmittel (16) angeschlossen sind und ein zweites Fehlersignal (E10) liefern, das mit dem ersten Fehlersignal (E1) identisch ist, wenn das erste Fehlersignal (E1) unter einem festgelegten Fehlerschwellwert (Se1) liegt, bzw. dem Produkt aus dem ersten Fehlersignal (E1) und einem festgelegten Koeffizienten (K) mit einem Wert > 1 entspricht, wenn das erste Fehlersignal über dem genannten Fehlerschwellwert liegt, wobei eine Korrekturschaltung (46) an den Ausgang der Schnellkorrekturmittel (45) angeschlossen ist.

8. Stromversorgung nach Anspruch 7, **dadurch gekennzeichnet, daß** die dritten Korrekturmittel (17, 18) an den Ausgang der Korrekturschaltung (46) angeschlossene Mittel (18) zur Sinusstromentnahme sowie Umschaltmittel (25, 26) umfassen, die dazu dienen, den ersten und den zweiten Ausgang der Spannungsregelmittel mit einem Ausgang (E3) der Sinusstrom-Entnahmemittel zu verbinden, wenn die Stromversorgung im Netzbetrieb arbeitet und das Einspeisenetz ein Einphasennetz ist, bzw. den genannten ersten Ausgang der Spannungsregelmittel mit dem Ausgang der Korrekturschaltung (46) sowie den genannten zweiten Ausgang der Spannungsregelmittel über ein Invertierglied (27) mit dem Ausgang der Korrekturschaltung (46) zu verbinden, wenn die Stromversorgung im Batteriebetrieb arbeitet oder das Einspeisenetz ein Dreiphasennetz ist.

**Claims**

1. An uninterruptible power supply comprising rectifier means (1) connected to an AC voltage system and comprising positive and negative outputs, a battery (2) connected to the outputs of the rectifier means (1), a double step-up chopper (4) comprising a positive chopper circuit (L1, T1, D3, D4), having an input (5) connected to the positive output of the rectifier means, a negative chopper circuit (L2, T2, D5, D6), having an input (6) connected to the negative output of the rectifier means, and a control circuit (9) connected to the double step-up chopper (4) so that the positive chopper circuit supplies a first DC voltage (V1) between an intermediate output and a positive conductor and that the negative chopper circuit supplies a second DC voltage (V2) between said intermediate output and a negative conductor, DC-to-AC conversion means (12) being connected between the negative and positive conductors, the power system comprising a neutral conductor (N) directly connected to said intermediate output and to an output of the DC-to-AC conversion means, power supply **characterized in that** no terminal of the battery (2) is directly connected to the neutral conductor (N) and that the control circuit (9) comprises means (30) for regulating an unbalance between the absolute values of said first and second DC voltages (V1, V2).

2. Power supply according to claim 1, **characterized in that** the means (30) for regulating an unbalance comprise means for measuring the first and second DC voltages (V1, V2), first difference determining means (31) for determining the difference (E8) between the absolute values of the first and second DC voltages, first correction means (35) connected to the first difference determining means, an inverter (36) connected to the first difference determining means and comprising an output (E9) connected to an input of second correction means (37), switching means (38) having a first input connected to an output of the first correction means (35), a second input connected to an output of the second correction means (37), and a control input (A1) to connect the first input of the switching means to an output (E4) of the means (30) for regulating an unbalance when the power supply device is operating on mains power and to connect the second input of the switching means to said output (E4) when the power supply device is operating on the battery.

3. Power supply according to claim 2, **characterized in that** the first and second correction means (35, 37) each comprise an integrator and a zero reset input, the integrator of the first correction means (35) being kept at zero when the power supply is operating on the battery and the integrator of the second correction means being kept at zero when the power supply is operating on the mains power system.

4. Power supply according to any one of the claims 1 to 3, **characterized in that** the control circuit (9) comprises means (15, 16, 17, 18, 25, 26) for regulating the voltage (Vg) between the positive and negative conductors, first (E5, E7, 22) and second (E6, E8, 24) current regulating means respectively associated to each of the chopper circuits, the output (E4) of the means (30) for regulating an unbalance being connected to an input of each of the current regulating means.

5. Power supply according to claim 4, **characterized in that** the first and second current regulating means each comprise forcing means (28, 29, A7, A8) for forcing a value representative of a reference current to a preset value (+Va, -Va) and control means (39 to 44) of said forcing means comprising means (39, 40) for comparing the first and second DC voltages (V1, V2) with respective preset thresholds (S1, S2).

6. Power supply according to claim 5, **characterized in that**, when the device is supplied by the battery, the control means supply a control signal (A7, A8) of the forcing means of the positive and negative chopper circuits if the first and second DC voltages (V1, V2) are simultaneously lower than their respective thresholds (S1, S2), a control signal (A7) of the forcing means of the positive chopper circuit if the second DC voltage (V2) is lower than the associated threshold (S2) whereas the first DC voltage (V1) is higher than the associated threshold (S1), and a control signal (A8) of the forcing means of the negative chopper circuit if the first DC voltage (V1) is lower than the associated threshold (S1) whereas the second DC voltage (V2) is higher than the associated threshold (S2).

7.  Power supply according to any one of the claims 4 to 6, **characterized in that** the voltage regulation means comprise means (V1, V2, 15) for measuring the voltage (Vg) between the positive and negative conductors, second difference determining means (16) to determine the difference between a reference global DC voltage (Vref) and the voltage (Vg) between the positive and negative conductors and to supply a first error signal (E1), and third correction means (17, 18) comprising fast correction means (45) connected to the output of the second difference determining means (16) and supplying a second error signal (E10) identical to the first error signal (E1) when the first error signal (E1) is lower than a preset error threshold (Se1) and equal to the product of the first error signal (E1) by a preset coefficient (K), greater than 1, when the first error signal is higher than said error threshold, a corrector circuit (46) being connected to the output of the fast correction means (45).

8.  Power supply according to claim 7, **characterized in that** the third correction means (17, 18) comprise means (18) for sinusoidal current sampling, connected to the output of the corrector circuit (46), and switching means (25, 26) to connect first and second outputs of the voltage regulation means to an output (E3) of the means for sinusoidal current sampling when the power supply is operating on the mains power system and the mains power system is a single-phase power system, and to connect said first output of the voltage regulation means to the output of the corrector circuit (46) and said second output of the voltage regulation means to the output of the corrector circuit (46) via an inverter (27) when the power supply is operating on the battery or when the power system is a three-phase power system.

Fig.1

Fig.2

Fig.6

Fig.3

EP 0 654 887 B1

Fig. 4

EP 0 654 887 B1

Fig.5